## Europäisches Patentamt

## European Patent Office

## Office européen des brevets

(11) Veröffentlichungsnummer: **0 254 116**
**A2**

(12) **EUROPÄISCHE PATENTANMELDUNG**

(21) Anmeldenummer: 87109713.5

(22) Anmeldetag: 06.07.87

(51) Int. Cl.⁴: **H04M 3/00** , **H04M 19/00** , **H04B 1/58**

(30) Priorität: 23.07.86 DE 3624809

(43) Veröffentlichungstag der Anmeldung:
27.01.88 Patentblatt 88/04

(84) Benannte Vertragsstaaten:
AT BE CH DE FR GB IT LI NL

(71) Anmelder: **Siemens Aktiengesellschaft Berlin und München**
**Wittelsbacherplatz 2**
**D-8000 München 2(DE)**

(72) Erfinder: **Helsmoortel, Luc**
**Zandstraat 19**
**BE-08401 Bredene(BE)**

(54) Schaltungsanordnung zur Anpassung einer zweiadrigen Teilnehmeranschlußleitung für den Anschluß an eine einadrig durchschaltende Koppeleinrichtung in Fernsprechvermittlungsanlagen, insbesondere Fernsprechnebenstellenanlagen.

㊄ Zur Trennung der zwischen Teilnehmerstellen übermittelten Sprachsignale in ankommender und in gehender Richtung werden Differenzverstärker eingesetzt. Die aus der Koppeleinrichtung kommenden Sprachsignale werden über einen Differenzverstärker (OP3) und einen Transistor (TR1) der Leitungsspannung überlagert und unter Mitwirkung eines weiteren Differenzverstärkers (OP2) rückwirkungsfrei der empfangenden Anschlußstelle (T1) zugeführt. Durch eine bestimmte Figuration (R11, C5; R12, C6; Differenzverstärker OP3) wird gleichfalls eine Signalüberkopplung vom Sendezweig auf den Empfangszweig für die betreffende Teilnehmerstelle vermieden.

Xerox Copy Centre

# Schaltungsanordnung zur Anpassung einer zweiadrigen Teilnehmeranschlußleitung für den Anschluß an eine einadrig durchschaltende Koppeleinrichtung in Fernsprechvermittlungsanlagen, insbesondere Fernsprechnebenstellenanlagen

Die Erfindung betrifft eine Schaltungsanordnung zur Anpassung einer zweiadrigen Teilnehmeranschlußleitung für den Anschluß an eine einadrig durchschaltende elektronische Koppeleinrichtung in Fernsprechvermittlungsanlagen, insbesondere Fernsprechnebenstellenanlagen, wobei eine aus mindestens einem Differenzverstärker aufgebaute Gabelanordnung verwendet wird.

In einer Fernsprechvermittlungsanlage wird zum Anschluß einer jeden Teilnehmeranschlußleitung an die zentralen Einheiten eine Teilnehmerschaltung benötigt, welche die Sprachsignale in beiden Richtungen überträgt, eine Abschlußimpedanz für die Leitung bildet und neben weiteren Funktionen auch Indikationsaufgaben erfüllt.

Mit Hilfe einer Gabelanordnung kann der Signalübergang von der Zweidrahtstrecke auf die zur Trennung der beiden Übertragungsrichtungen dienende Vierdrahtstrecke ermöglicht werden. Dabei soll eine Signalüberkopplung vom Empfangszweig auf den Sendezweig unterbunden werden. Es sind derartige Gabelanordnungen in Form von Brückenschaltungen mit Gabelübertragern bekannt. Neben dem großen Volumen und dem großen Gewicht ist die Anwendung von Übertragern mit einer Reihe von weiteren Nachteilen behaftet. Es besteht beispielsweise die Gefahr einer elektromagnetischen Kopplung zwischen benachbarten Gabelanordnungen und es treten große Dämpfungsverluste auf. Man ist daher zu Gabelanordnungen übergegangen, die übertragerlos unter Verwendung von Operationsverstärkern bzw. von als Differenzverstärker beschalteten Operationsverstärkern aufgebaut sind. Insbesondere für Anlagen, bei denen ausgehend von der zweidrähtigen Teilnehmeranschlußleitung die Durchschaltung in der Vermittlungsstelle vierdrähtig erfolgt, ist eine Gabelanordnung dieser Art (US-PS 4 041 252) bekannt, die in bestimmter Weise beschaltete Operationsverstärker aufweist. Es wird beispielsweise der Vierdrahtleitungsausgang von einem Differenzverstärker gebildet, dessen beide Eingänge an die beiden Leitungsadern der Teilnehmeranschlußleitung angekoppelt sind, wobei diesem Differenzverstärker noch ein weiterer Operationsverstärker nachgeschaltet ist. Außerdem ist ein Abgleichnetzwerk vorhanden, das zwischen der einen Leitungsader der Teilnehmeranschlußleitung und dem einen Eingang des Operationsverstärkers liegt.

Aufgabe der Erfindung ist es, eine Schaltungsanordnung zur Anpassung einer zweiadrigen Teilnehmeranschlußleitung für den Anschluß an eine einadrig durchschaltete Koppeleinrichtung, anzugeben, die mit schaltungstechnisch geringem Aufwand realisierbar ist. Gleichzeitig soll in optimaler Weise eibe Rückwirkung eines empfangenen Signals auf den Sendezweig bzw. eines Sendesignals auf den Empfangszweig vermieden werden und es sollen asymmetrisch gegen Masse auftretende Störspannungen eliminierbar sein.

Dies wird dadurch erreicht, daß ein mit der Anschlußleitung gekoppelter und aus einem Differenzverstärker, zwei an dessen Ausgang angeschlossenen und mit ihrem anderen Anschluß an jeweils einen der Eingänge eines weiteren, ausgangsseitig mit der Leitung zu koppelnden Differenzverstärker angeschalteten Widerstände bestehender Schaltungsteil vorhanden ist, der über den Verbindungspunkt des einen Eingangs des Differenzverstärkers und des einen Widerstandes mit dem jeweiligen Anschlußpunkt der Koppeleinrichtung verbunden ist, daß der Verbindungspunkt des anderen Widerstandes mit dem anderen Eingang des Differenzverstärker über einen Widerstand mit der ihrerseits mit der Anschlußleitung gekoppelten Ausgangselektrode eines mit den Ausgangssignalen des Differenzverstärker eingangsseitig beaufschlagten Transistors verbunden ist und daß der Differenzverstärker des Schaltungsteils über einen Widerstand gleichfalls mit der Anschlußleitung gekoppelt ist, so daß lediglich aus der Koppeleinrichtung kommende Signale der Leitungsspannung überlagert und rückwirkungsfrei der empfangenden Anschlußstelle zugeführt werden.

Um die Anschlußorgane einadrig an die Koppeleinrichtung heranzuführen, werden also in jeder Teilnehmerschaltung zwei hintereinander liegende Gabelanordnungen gebildet. Der Übertragungsweg besteht aus einer den ersten Operationsverstärker einbeziehenden Zweidrahtstrecke und einer Vierdrahtstrecke, die in Senderichtung den Ausgang des Operationsverstärkers und den einen Widerstand und in Empfangsrichtung die Ausgangselektrode des genannten Transistors und den Rückkopplungszweig zu dem Operationsverstärker beinhaltet. Daran schließt sich dann erneut eine Zweidrahtstrecke mit der Rückleitung über Massepotential an. Der Anteil des empfangenen Signals wird - bezogen auf die Senderichtung - vermittels des Gegenkopplungszweiges und geeigneter Dimensionierung vollständig ausgeblendet. Es wird von einer Konfiguration ausgegangen, die sich nicht auf Kostantstromquellen, sondern lediglich auf Spannungsquellen abstützt.

Eine Weiterbildung sieht vor, daß der genannte Schaltungsteil in gleicher Weise mit der jeweils anderen Anschlußseite der Koppeleinrichtung verbunden ist. Das in einer Gesprächsverbindung empfangene Signal verläuft dann über den Operationsverstärker und den einen Widerstandszweig dieser jeweiligen Gegenseite.

Eine andere Weiterbildung besteht darin, daß an die Anschlußpunkte zu der jeweiligen Anschlußleitung gleichstrommäßig entkoppelt, jeweils ein Eingang eines weiteren Differenzverstärkers angeschlossen ist, daß dessen Ausgang· mit der nicht über den Widerstand mit der Anschlußleitung gekoppelten Eingang des Differenzverstärkers des Schaltungsteils verbunden ist. Signale, die symmetrisch gegenüber Massepotential an den Adern auftreten, werden über diesen weiteren Operationsverstärker weitergeleitet. Solche Signale stellen beispielsweise die von der betreffenden Teilnehmerstelle abgegebenen Sprachsignale dar. Asymmetrische Signale, wie beispielsweise in der Anschlußleitung induzierte Störspannungen werden vollständig ausgeblendet.

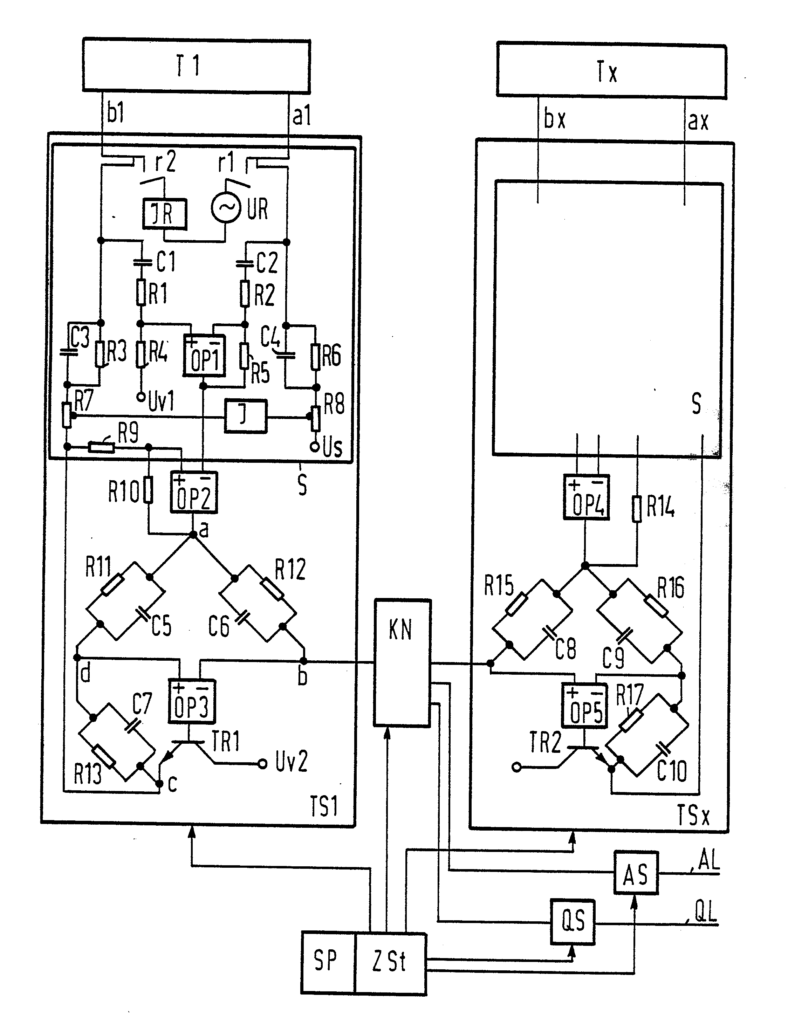

Das erfindungsgemäße Verfahren· wird anhand eines . in der Figur dargestellten Ausführungsbeispiels, das nur die zum Verständnis erforderlichen Einzelheiten zeigt, erläutert. Es sind in einem modifizierten Blockschaltbild Teile einer Nebenstellenanlage dargestellt, die beispielsweise eine rechnergesteuerte speicherprogrammierte Vermittlungsanlage sein kann. Die zentrale Steuereinrichtung ZSt steuert im wesentlichen die für die einzelnen Betriebsmöglichkeiten der Anlage erforderlichen Abläufe. Dabei greift sie auf entsprechende· Programmteile zurück, die in der ihr zugeordneten Speichereinrichtung SP abgespeichert sind.

Es sollen die für eine zeitgemäße Anlage vorgesehenen Verkehrsmöglichkeiten bestehen und entsprechen verschiedene Leistungsmerkmale im Zusammenhang mit bereits bestehenden oder aufzubauenden Sprechverbindungen aktivierbar sein. Es sind einige der für den Standardverkehr vorgesehenen Verbindungssätze, nämlich ein Amtssatz AS und ein bei einer über eine Verbindungsleitung QL zu einer weiteren Nebenstellenanlage heranzusehender Leitungssatz QS dargestellt. Die Steuerung dieser peripheren Einheiten wird gegebenenfalls unter Einbeziehung von Teilsteuereinheiten durch die zentral Steuereinheit ZSt bewirkt. Eine externe Verbindung wird somit über die Amtsleitung AL bzw. über die Querverbindungsleitung QL abgewickelt.

Für jede Teilnehmerstelle T, von denen Stellvertretend für alle übrigen lediglich die Teilnehmerstellen T1 und Tx gezeigt sind, ist eine Teilnehmerschaltung TS vorgesehen. Diese enthält jeweils eine Indikationsstelle I, die Zustandsänderungen auf der jeweiligen Anschlußleitung erfaßt. Diese werden dann durch die Systemsteuerung ZSt erkannt. Die teilnehmerseitig ausgegebenen Informationen haben dann auch Einstellbefehle für die in der jeweiligen Teilnehmerschaltung enthaltenen Funktionsschalter zur Folge. Aufgrund einer solchen Einstellinformation wird die Betätigungsart eines Funktionsschalters festgelegt und gleichzeitig der betreffende Funktionsschalter ausgewählt. So wird beispielsweise durch die Funktionsschalter r1 und r2 aufgrund entsprechender Einstellbefehle der Steuerung die Rufanschaltung veranlaßt und der entsprechende Rufrythmus bewirkt. Der jeweilige Rufstromkreis enthält die Rufstromquelle UR und die Rufindikationsstelle IR. Nach der Durchschaltung der in der Koppeleinrichtung KN für den betreffenden Verbindungsweg ausgesuchten elektronischen Koppelpunkte wird also zum gerufenen Teil nehmer das Rufsignal und zum rufenden Teilnehmer Freiton aus der Teilnehmerschaltung ausgesendet. Wird durch einen der beteiligten Teilnehmer eingehängt, so bewirkt dies durch entsprechende Befehle das Auslösen der Teilnehmerschaltung und des eingestellten Weges. Das Einhängen wird in gleicher Weise wie das Belegen, die Wahlinformationen und der Erdtastendruck vermittels der Indikationsstelle I registriert.

Betrachtet man den statischen Zustand, so erscheint die am Widerstand R4 anliegende Versorgungsspannung Uv1 von beispielsweise 5 V über den nicht invertierenden Eingang des Operationsverstärker OP1 an dessen Ausgang und damit am Ausgang des nachgeschalteten Operationsverstärkers OP2. Auf dem gleichen Potential liegen somit die Punkte a...c. Ist die Teilnehmerschleife der über die Adern a1 und b1 angeschlossenen Teilnehmerstelle T1 geschlossen, so fließt über den aufgesteuerten Transistor T1 und die Widerstände R7, R3, R6 und R8 Speisestrom. Die Speisespannung setzt sich aus der Summe von Uv1 und Us zusammen und beträgt beispielsweise 48 V. Mit den im Speisekreis liegenden RC-Kombinationen, nämlich dem Widerstand R7 und der mit ihm in Reihe liegenden Parallelschaltung aus dem Widerstand R3 sowie dem Widerstand R8 und der mit ihm in Reihe liegenden Parallelschaltung aus dem Widerstand R6 und dem Kondensator C4 wird der Eingangswiderstand der angeschlossenen Teilnehmerstelle nachgebildet. Die über die Teilnehmerstelle T1 gelieferte Signalinformation in Form der Sprachwechselspannung wird über die Adern a1 und b1 der jeweiligen Anschlußleitung über das aus dem Kondensator C1 und dem Widerstand R1 bestehende RC-Glied dem nicht invertierenden Eingang und über das aus dem Kondensator C2 und dem Widerstand R2 bestehende RC-Glied dem invertierenden Eingang des als Differenzverstärker be schalteten Operationsverstärkers OP1 zugeführt. Diese symmetrisch gegenüber Erdpotential an den Leitungsadern auftretende Signal liegt and den beiden Eingängen des Operationsverstärkers OP1 an. Es wird durch diesen Operationsverstärker sowie durch den nachgeordneten Operationsverstärker OP2 verstärkt und erscheint phasengleich an den Schaltungspunkten b und d. Die Eingänge des Differenzverstärkers OP3 liegen somit aufgrund der vorgegebenen Konfiguration auf gleichem Potential und werden somit nicht beeinflußt. Damit wird eine Rückwirkung des gehenden Signals auf die das Signal erzeugende Teilnehmerstelle T1 vermieden. Die den Schaltungspunkt c darstellende Ausgangselektrode des Transistors TR1 ist in gleicher Weise wie der Schaltungspunkt a für die Wechselspannung als ein virtuell auf Erdpotential liegender Punkt zu betrachten. Das gleiche trifft auf den Anschaltungspunkt für die Versorgungsspannung Us zu, da eine Versorgungsspannung mit sehr großen Kapazitäten entkoppelt ist, wodurch sich ein äußerst niedriger Wechselstromwiderstand ergibt. Es liegt eine Anordnung vor, bei der der Differenzverstärker OP3 in der Diagonalen einer Brückenhälfte liegt, die jeweils aus der Parallelschaltung eines Widerstandes R11 une eines Kondensators C5 bzw. aus der Parallelschaltung eines Widerstandes R12 mit dem Kondensator C6 besteht und wobei deren gemeinsamer Verbindungspunkt a mit dem Ausgang des Differenzverstärkers OP2 verbunden ist. Zwischen der Ausgangselektrode des dem Operationsverstärkers OP3 nachgeschalteten Transistors TR1 und dem Schaltungspunkt d liegt als weiterer Brückenzweig die Parallelschaltung aus dem Widerstand R13 und dem Kondensator C7. Die Widerstände R11...R13 sind wertemäßig gleich. Es wird nun vorausgesetzt, daß auf der jeweils anderen Anschlußseite nach Durchlauf des abgehenden Signals durch die Koppeleinrichtung KN eine in gleicher Weise aufgebaute und aus den Widerständen R15...R17, den Kondensatoren C8...C10, den Operationsverstärker OP4 und OP5 bestehende Anordnung vorhanden ist. Diese nach Art einer Brückenschaltung gebildete Anordnung kann bei einer Internverbindung eine in gleicher Weise wie die Teilnehmerschaltung TS1 aufgebaute Teilnehmerschaltung TSx sein, die beispielsweise der Teilnehmerstelle Tx zugeordnet ist. In einem solchen Fall ist die mit S bezeichnete Einheit der Teilnehmerschaltung TSx mit der Einheit S der Teilnehmerschaltung TS1 identisch.

Bei einer externen Verbindung, beispielsweise bei einer über die Amtsleitung aufgebauten Verbindung zu einer öffentlichen Vermittlungsstelle könnte diese Anordnung einen Schaltungsteil des Amtssatzes bilden.

Im Ausführungsbeispiel soll an der Ausgangsseite der Koppeleinrichtung KN gleichfalls eine Teilnehmerschaltung, nämlich die Teilnehmerschaltung TSx angeschaltet sein. Das über den Operationsverstärker OP2 und das aus der Parallelschaltung des Widerstandes R12 und des Kondensators C6 von der Teilnehmerstelle T1 gelieferte Signal wird über die Koppeleinrichtung an die empfangsseitige Teilnehmerschaltung abgegeben. Das Signal steuert somit den dort vorhandenen Operationsverstärker OP5 über dessen nicht invertierenden Eingang. Das Signal ist der Gleichspannung überlagert. Nach Verstärkung über den Transistor TR2 wird es der Speisespannung aufgeprägt. In der Gegenrichtung erfolgt dann die Signalübertragung auf die gleiche Weise.

Der Schaltungspunkt a in der Teilnehmerschaltung TSx ist ebenfalls als ein virtuell auf Erdpotential liegender Punkt anzusehen, da der Ausgang eines Operationsverstärkers eine Ausgangsimpedanz von nahezu Null Ohm aufweist. Aus dieser Betrachtungsweise ergibt sich, daß der zwischen den Schaltungspunkten a und b der Teilnehmerschaltung TSx liegende und aus der Parallelschaltung des Widerstandes R15 und des Kondensators C8 bestehende Zweig gewissermaßen die Brückenanordnung der korrespondierenden Teilnehmerschaltung TS1 ergänzt. Da - wie bereits erwähnt - der Punkt c als ein gleichfalls virtuell auf Erdpotential liegender Punkt zu gelten hat, wird die Brückenanordnung durch diesen Zweig der jeweils anderen Brückenanordnung vervollständigt. Die Teilung d und c entspricht der Teilung zwischen den Punkten a, b und die Teilung über die zwischen den Punkten a und d bzw. zwischen den Punkten d und c liegenden Zweige entspricht der Teilung, die durch den zwischen den Punkten a und b derselben Anordnung liegenden Zweig und dem zwischen den Punkten b und a der Anordnung in der jeweils anderen Teilnehmerschaltung liegenden Zweig gegeben ist. Zwischen den Punkten d und b der Anordnung, die der Sendeseite zugehörig ist, entsteht das gleiche Potential. Die den Widerständen R11...R13 bzw. R15...R17 jeweils parallel liegenden Kondensatoren dienen Kompensationszwecken. Damit wird erreicht, daß ein gleicher Phasenlauf an den Schaltungspunkten a...c entsteht. Die mit elektronischen Koppelpunkten aufgebaute Koppeleinrichtung KN wird zur Einsparung von Koppelpunkten einadrig durchgeschaltet. Die jeweils andere Ader wird durch das Erdpotential realisiert.

Störspannungen, die auf der jeweiligen Anschlußleitung z. B. in die Adern a1 und b1 eingekoppelt werden, können sich nicht störend auswirken. Diese treten nämlich als gegenüber Erdpotential asymmetrische Signale mit gleicher Größe und gleicher Phase an den Eingängen des als Differenzverstärker beschalteten Operationsverstärkers OP1 auf und erscheinen demnach nicht mehr im Ausgangssignal. Es findet somit eine vollständige Unterdrückung derartiger Störspannungen statt.

Das jeweils empfangene Sprachsignal wird - wie bereits erwähnt - z. B. über den Operationsverstärker OP3 und dem Transistor TR1 der Speisespannung aufgeprägt. Es wird somit über die jeweilige Nachbildung des Sprechstelleneingangswiderstandes der Teilnehmerstelle zugeführt. Bezogen auf die Teilnehmerschaltung TS1 gelangt ein derartiges Empfangssignal nicht nur zu der dafür vorgesehenen Teilnehmerstelle, sondern es wird auch über die Reihenschaltung des Kondensators C1 mit dem Widerstand R1 auf den nicht invertierenden Eingang und über die Reihenschaltung aus dem Kondensator C2 und dem Widerstand R2 auf dem invertierenden Eingang des Operationsverstärkers OP1 zurückgeführt. Es liegt also zusätzlich wie ein auszusendendes Signal an diesen Eingängen an und erscheint somit auch am nicht invertierenden Eingang des Operationsverstärkers OP2. Es liegt also theoretisch die Summe aus dem gesendeten und dem empfangenen Signal an, wenn solche Signale zur gleichen Zeit vorhanden sind. Um zu verhindern, daß ein empfangenes Signal auf die Senderichtung zurückwirken kann, wird über den Widerstand R9 das empfangene Signal gleichzeitig dem nicht invertierenden Eingang des Operationsverstärkers OP2 zugeführt. Über die Funktion als Differenzverstärker wird damit erreicht, daß der Anteil des empfangenen Signals unwirksam wird. Dies setzt voraus, daß sie an den Eingängen des Operationsverstärkers OP2 mit jeweils gleichem Spannungswert auftreten. Hierfür ist der aus den Widerständen R9 und R10 bestehende Teiler entsprechend zu dimensionieren. Mit der - bezogen auf die Senderichtung - vorgenommenen Abblockung des empfangenen Signals ist somit die Gabelfunktion erfüllt. Da - ausgehend von der Teilnehmerstelle - von einer Zweidrahtstrecke auf eine Vierdrahtstrecke und dann anschließend erneut auf eine Zweidraht strecke umgesetzt wird, sind also zwei hintereinander liegende Gabeln vorhanden. Die Vierdrahtstrecke verläuft in Senderichtung über den Ausgang des Operationsverstärkers OP2 und dem aus dem Widerstand R12 und dem Kondensator C6 bestehenden Zweig und in der Empfangsrichtung - ausgehend vom Operationsverstärker OP3 und dem Transistor TR1 - über den Schaltungspunkt c zu der durch den Widerstand R7 bzw. durch den Widerstand R9 vorgegebenen Verzweigung. Um eine gewünschte Pegelanpassung zu erreichen, müssen die Widerstände R1, R4 und R2, R5 in einem bestimmten Verhältnis zu den Widerstandswerten der Widerstände R9 und R10 stehen.

Bezugszeichenliste

AS Amtssatz
AL Amtseitung
a1, ax Leitungsader
b1, bx Leitungsader
a, b, c, d Schaltungspunkt
c1 .. C10 Kondensator
I Indikationsschaltung
IR Rufindikationsschaltung
KN Koppeleinrichtung
OP1 .. OP5 Operationsverstärker
QS Leitungssatz
QL Querverbindungsleitung
r1, r2 Funktionsschalter
R1 - R16 Widerstand
S Teilnehmerschaltungseinheit
SP Speicher
UR Rufstromquelle
US Versorgungsspannung
Uv1, Uv2 Versorgungsspannung
T1, Tx Teilnehmerstelle
TS1 .. TSx Teilnehmerschaltung
TR1, TR2 Transistor
ZST zentrale Steuereinrichtung

**Ansprüche**

1. Schaltungsanordnung zur Anpassung einer zweiadrigen Teilnehmeranschlußleitung für den Anschluß an eine einadrig durchschaltende elektronische Koppeleinrichtung in Fernsprechvermittlungsanlagen, insbesondere Fernsprechnebenstellenanlagen, wobei eine aus mindestens einem Differenzverstärker aufgebaute Gabelanordnung verwendet wird, **dadurch gekennzeichnet,** daß ein mit der Anschlußleitung (a1, b1) gekoppelter und aus einem Differenzverstärker (OP2), zwei an dessen Ausgang angeschlossen und mit ihrem anderen Anschluß an jeweils einen der Eingänge eines weiteren, ausgangsseitig mit der Leitung zu koppelnden Differenzverstärker (OP3) angeschalteten Widerstände (R11 bzw. R12) bestehender Schaltungsteil vorhanden ist, der über den Verbindungspunkt des einen Eingangs des Differenzverstärkers (OP3) und des einen Widerstandes (R12) mit dem jeweiligen Anschlußpunkt der Koppeleinrichtung (KN) verbunden ist, daß der Verbindungspunkt des anderen Widerstandes (R11) mit dem anderen Eingang des Differenzverstärker (OP3) über einen Widerstand (R13) mit der ihrerseits mit der Anschlußleitung gekoppelten Ausgangselektrode eines mit den Ausgangssignalen des Differenzverstärkers (OP3) eingangsseitig beaufschlagten Transistors (T1) verbunden ist, und daß der Differenzverstärker (OP2) des Schaltungsteils über einen Widerstand (R9) gleichfalls mit der Anschlußleitung gekoppelt ist, so daß lediglich aus der Koppeleinrichtung empfangene Signale der Leitungsspannung überlagert und rückwirkungsfrei der empfangenden Anschlußstelle zugeführt werden.

2. Schaltungsanordnung nach Anspruch 1,
**dadurch gekennzeichnet,**
daß der genannte Schaltungsteil in gleicher Weise mit der jeweils anderen Anschlußseite der Koppeleinrichtung (KN) verbunden ist.

3. Schaltungsanordnung nach Anspruch 1,
**dadurch gekennzeichnet,**
daß an die Anschlußpunkte der jeweiligen Anschlußleitung (a1, b1) gleichstrommäßig entkoppelt jeweils ein Eingang eines Differenzverstärkers (OP1) angeschlossen ist, daß dessen Ausgang mit der nicht über den Widerstand (R9) mit der Anschlußleitung (a1, b1) gekoppelten Eingang des Differenzverstärkers (OP2) des Schaltungsteils verbunden ist.

4. Schaltungsanordnung nach Anspruch 1,
**dadurch gekennzeichnet,**
daß die genannten Widerstände (R11, R12, R13) wertemäßig einander gleich sind und mit Kondensatoren (C5...C7) überbrückt sind.

5. Schaltungsanordnung nach Anspruch 1,
**dadurch gekennzeichnet,**
daß unmittelbar vor den Anschlußpunkten der jeweiligen Anschlußleitung teilnehmerschaltungsseitig jeweils eine den Eingangswiderstand der Teilnehmerstelle nachbildenden Widerstands-Kondensatorkombination (R7, R3, C3 bzw. R8, R6, C4) geschaltet ist.

6. Schaltungsanordnung nach Anspruch 1,
**dadurch gekennzeichnet,**
daß -bezogen auf die eine Ader (a1) - die Widerstands-Kondensatorkombination an die Versorgungsspannungsquelle (Us) angeschaltet ist.